(19) Europäisches Patentamt

European Patent Office

Office européen des brevets

(11) Publication number: **0 276 321 B1**

## (12) EUROPEAN PATENT SPECIFICATION

(45) Date of publication of patent specification: **16.06.93**

(51) Int. Cl.5: **C01F 7/02**, C08K 7/18, H01L 23/29, H01L 23/14, //H05K1/03

(21) Application number: **87904570.6**

(22) Date of filing: **14.07.87**

(86) International application number:
**PCT/JP87/00508**

(87) International publication number:
**WO 88/00573 (28.01.88 88/03)**

(54) **SPHERICAL CORUNDUM PARTICLES, PROCESS FOR THEIR PRODUCTION, AND HIGHLY HEAT-CONDUCTIVE RUBBER OR PLASTIC COMPOSITION CONTAINING THEM.**

(30) Priority: **14.07.86 JP 163719/86**

(43) Date of publication of application:
**03.08.88 Bulletin 88/31**

(45) Publication of the grant of the patent:
**16.06.93 Bulletin 93/24**

(84) Designated Contracting States:
**DE FR GB NL**

(56) References cited:
**JP-A- 5 930 719**
**JP-A- 5 997 528**
**JP-A-58 181 725**
**JP-A-62 191 420**
**JP-B- 6 026 505**

(73) Proprietor: **SHOWA DENKO KABUSHIKI KAISHA**
**10-12, Shiba Daimon 2-chome Minato-ku Tokyo(JP)**

(72) Inventor: **ODA, Yukio**
**1230-4, Chogo Fujisawa-shi Kanagawa 252(JP)**
Inventor: **OGAWA, Jun 95-1, Kitayacho Nakahara-ku Kawasaki-shi Kanagawa 211(JP)**

(74) Representative: **Adams, William Gordon et al RAWORTH, MOSS & COOK 36 Sydenham Road Croydon Surrey CR0 2EF (GB)**

**Description**

The present invention relates to spherical corundum particles without cutting edges, and having an excellent less abrasive property and flow characteristic and valuable as a filler for a sealing material for electronic parts, a finishing additive or base material, a starting material of a wrapping material, and an additive or base material for refractories, glass or ceramics, a process for the preparation of such corundum particles, a rubber or plastic composition having a high concentration of such corundum particles incorporated therein, and having a high thermal conductivity and a low thermal expansion coefficient, and an electrical or electronic part formed by using this rubber or plastic composition.

Recent increases in the degree of integration and density in electronic parts have increased the power consumption per chip, and therefore, an important problem has arisen of how efficiently the generated heat is radiated or how effectively the elevation of the temperature is suppressed. Accordingly, the development of a material having an excellent thermal conductivity, which is suitable as an insulating sealing material for semiconductors, a material for a substrate on which parts are mounted, and a peripheral material such as a heat-radiating spacer, is demanded.

Another problem concerning heat is how to best maintain the conformity of the thermal expansion coefficient of an element and of an insulating material for sealing the element. If there is a difference in the thermal expansion coefficient, the thermal stress is repeatedly applied to the bonding portion by the heat cycle when the operation of an integrated circuit (IC) is stopped with the result that the element is damaged. In general, since a resin has a high thermal expansion coefficient, an inorganic filler having a low thermal expansion coefficient is incorporated into the resin to match the thermal expansion coefficient with that of the element.

For example, an epoxy resin containing about 70% by weight of fused silica is generally used as an insulating sealing material for a large-scale integrated circuit (LSI), because of a low thermal expansion coefficient and a good conformability. However, since fused silica has an extremely low thermal conductivity, this epoxy resin material is not suitable for use in a field where heat radiation is very important. Accordingly, a composition having a thermal conductivity of about $60 \times 10^{-4}$ cal/cm•sec• °C, which is formed by filling a large amount of crystalline silica having a high thermal conductivity, is already in practical use. However, crystalline silica having a high thermal conductivity has a defect of a high thermal expansion coefficient. Therefore, the above two problems concerning heat, that is, the problems of heat radiation and thermal expansion conformation, cannot be solved by the use of fused silica or crystalline silica alone.

When fused silica and crystalline silica are simultaneously incorporated, since crystalline silica has a high Mohs hardness and comprises pulverized particles having irregular sharp cutting edges, if the amount of crystalline silica incorporated is increased, the flowability of the composition is drastically reduced and the wear of a kneader or a forming mold is greatly increased, and therefore, the amount of crystalline silica incorporated is restricted. As a means of reducing the wear, a method can be mentioned in which fused silica having a specific particle size distribution and a low abrasive property is used as a coarse particle fraction and mixed with a fine particle fraction of crystalline silica having a specific particle size distribution, to provide a composition having an excellent flowability and a reduced wear of a mold, as disclosed in Japanese Unexamined Patent Publication No. 58-164250. However, even in this composition, a reduction of the thermal conductivity due to fused silica cannot be avoided.

At present, even in a sealing material having a high thermal conductivity, the thermal conductivity is $60 \times 10^{-4}$ cal/cm•sec• °C at highest, and a level of $100 \times 10^{-4}$ cal/cm•sec• °C desired as the next target cannot be reached by using crystalline silica. Accordingly, $\alpha$-alumina, aluminum nitride, and silicon carbide are under consideration as the filler having a higher thermal conductivity than that of crystalline silica, and alumina is promising as the substitute for silica because alumina is relatively inexpensive, has a stable quality, and has a good general-purpose property.

However, in view of the characteristics of existing alumina, existing alumina cannot be considered suitable as a filler for rubbers or plastics. For example, alumina prepared according to the Bayer process consists of irregular shaped or plate-like primary particles having a size of several $\mu$m to about 10 $\mu$m at largest. Since this alumina has a large oil absorption, the filling property in rubbers or plastics is poor and the amount filled is limited to about 80% by weight, such that if alumina is incorporated, for example, into an epoxy resin, the thermal conductivity is $60 \times 10^{-4}$ cal/cm•sec• °C at highest. It is known that alumina formed by pulverizing electrofused alumina or sintered alumina is usable as a material of an abrasive or refractory. Since alumina of this type consists of dense corundum particles and the particle size can be optionally adjusted within a broad range of from a fine particle size to a coarse particle size of scores of $\mu$m, the oil absorption is small and the filling property in rubbers or plastics is excellent. However, the

2

pulverized particles of alumina of this type have many sharp angles and corundum ($\alpha$-$Al_2O_3$) has a high Mohs hardness. Therefore, the abrasive property is larger than that of crystalline silica having the same particle size, and corundum has a defect in that bonding wires or semiconductor elements are damaged thereby.

A rounded spherical shape having no cutting edges is desirable for alumina particles. As the process for preparing spherical alumina particles, a flame-spraying process is known in which alumina according to the Bayer process is sprayed into a high-temperature plasma or oxyhydrogen flame, and the alumina is fused and then rapidly cooled to form spherical particles. However, this process is economically disadvantageous in that the heat consumption is large, and although the obtained alumina is composed mainly of $\alpha$-$Al_2O_3$, it generally contains $\delta$-$Al_2O_3$ as a subsidiary component. The presence of this subsidiary component is unpreferable because the thermal conductivity of alumina is decreased by the subsidiary component.

As a means for solving the foregoing problems of the conventional techniques, several processes have been proposed for preparing $\alpha$-$Al_2O_3$ (corundum) particles having a particle size larger than 5 $\mu$m and a regular shape. For example, Japanese Examined Patent Publication No. 60-33763 discloses a process in which aluminum hydroxide having a high sodium content is preliminarily dehydrated, a specific mineralizing agent is added to the dehydration product, and the mixture is calcined in a rotary kiln to obtain coarse particles of alumina. Furthermore, Japanese Unexamined Patent Publication No. 58-181725 discloses a process in which a mineralizing agent containing fluorine and/or boron is added to dry-type absorption alumina and the mixture is calcined in a rotary kiln to obtain similar coarse particles of alumina. However, coarse particles of alumina prepared according to these processes have a shape including regular cutting edges, as shown in the drawing (microscope photograph) of Japanese Unexamined Patent Publication No. 58-181725, and do not possess a rounded spherical shape. Moreover, Japanese Unexamined Patent Publication No. 56-35494 (U.S. Patent No. 4,307,147) discloses a substrate having a covering film composed of a dispersion of polygonal corundum particles in an organic polymer. These corundum particles, however, are angular and do not possess a rounded spherical shape.

It is considered that, if spherical corundum particles in which sharp cutting edges are eliminated to reduce the abrasive and wearing properties are used and incorporated as a filler in a resin, a rubber or plastic composition having a good filling property, a reduced abrasive and wearing property, an excellent thermal conductivity, and a high thermal conductivity optimal for an insulating sealing material or the like, will be obtained. However, the kind of the resin in which such spherical corundum particles are to be incorporated, the amount added of the particles, and the incorporation method have not been investigated in detail, and a rubber or plastic composition having a high thermal conductivity and practically usable as a sealing material has not yet been developed.

DISCLOSURE OF THE INVENTION

Under this background, research was made into the developing of corundum composed of particles having reduced abrasive and wear properties, which is suitable as a filler, a scratch-free wrapping material or a base material of a ceramic or refractory material, without degradation of the inherent characteristics of corundum particles, such as thermal conductivity, electrical insulating characteristic, and hardness, and as a result, the present invention was completed.

More specifically, in accordance with the present invention, there are provided (1) a process for the preparation of spherical corundum particles, characterized by adding one or more members selected from the group consisting of halogen compounds, boron compounds and alumina hydrates to a pulverized product of at least one member of electrofused alumina and sintered alumina, which has a maximum particle size smaller than 150 $\mu$m and an average particle size of 5 to 35 $\mu$m, heat-treating the mixture at a temperature of at least 1000°C, and disintegrating the heat-treated product, and (2) corundum powder comprising a plurality of individual particles characterized by consisting substantially of spherical particles, having an average particle size of 5 to 35 $\mu$m and a shape not including sharp edges thereby having a reduced abrasive and wearing property.

Furthermore, in accordance with the present invention, there are provided (3) a composition comprising spherical corundum particles having an average particle size of 5 to 35 $\mu$m and a shape not including sharp edges thereby having a reduced abrasive and wearing property, and at least one member selected from rubbers and plastics material, and (4) a composition comprising spherical corundum particles and at least one member selected from rubbers and plastics material wherein the spherical corundum particles have a maximum particle size smaller than 150 $\mu$m and an average particle size of 5 to 35 $\mu$m and are formed by adding at least one of the members of halogen compounds, boron compounds and alumina hydrates to a

3

pulverized product of at least one of electrofused alumina and sintered alumina, which has a maximum single particle size smaller than 150 $\mu$m and an average particle size of 5 to 35 $\mu$m, heat-treating the mixture at a temperature of at least 1000°C, and disintegrating the heat-treated product. Such compositions with high thermal conductivity may find application when moulding a sealing material for a semiconductor, providing reduced viscosity and burr reduction.

BRIEF DESCRIPTION OF THE DRAWINGS

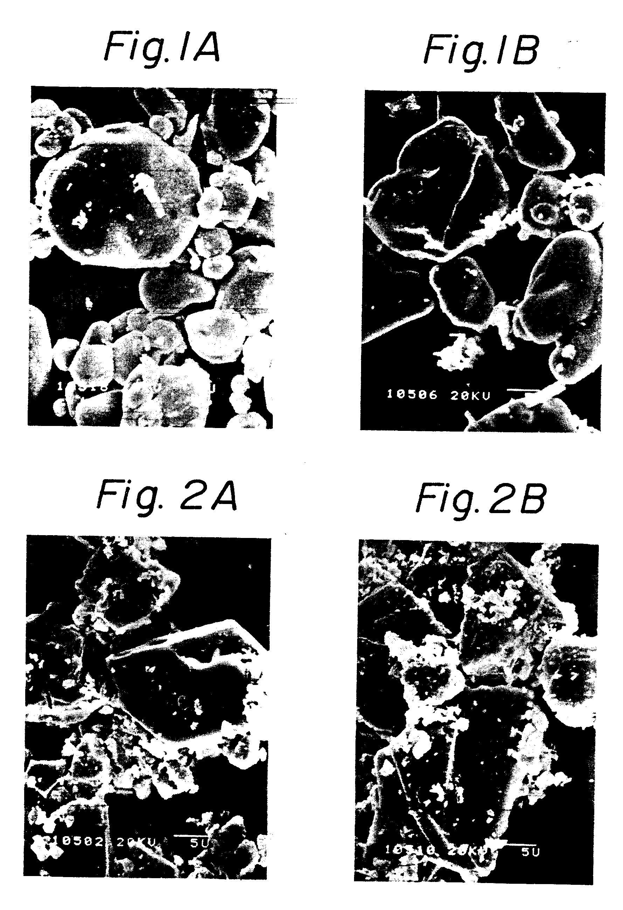

Figure 1A,1B,2A, and 2B are scanning electron microscopes (2500 magnification) of corundum particles, in which Fig. 1A shows corundum particles obtained in Example 1, Fig. 1B shows corundum particles obtained in Example 2, Fig. 2A shows corundum particles obtained in Comparative Example 1 and Fig. 2B shows corundum particles obtained in Comparative Example 2.

BEST MODE FOR CARRYING OUT THE INVENTION

It was noted that a pulverised product of electrofused alumina or sintered alumina, which has been used as an abrasive material or a fine aggregate of a refractory material, having an average particle size of 5 to 35 $\mu$m, preferably 10 to 25 $\mu$m (for example, RW 220F or SRW 325F supplied by Showa Denko) has a particle size distribution which is substantially the same as the particle size distribution of a pulverisation product of fused silica or crystalline silica ($\alpha$-SiO$_2$) used at present as a filler of a sealing material for an electronic part. Since such alumina has been molten or heat treated at a high temperature such as 1500 to 1850°C, the crystal of alumina is fully developed and the pulverised product has a particle size distribution desirable for a filler. However, since sharp cutting edges are formed at the pulverizing step as mentioned above, the pulverized product is not put to practical use as a filler. Accordingly, research was made with a view to improving the shape of the particles while retaining this preferred particle size distribution, and as a result, it was found that, if a small amount of a known chemical heretofore used as a mineralizing agent or crystal-growing agent for alumina, such as a halogen compound or a boron compound, is incorporated into a pulverized product of electrofused alumina or sintered alumina, and the mixture is heat-treated at a temperature of at least 1000°C, sharp angles, that is, cutting edges, of coarse particles of alumina are decreased and simultaneously, the shape is made spherical. The present invention was completed based on this finding.

Electrofused alumina or sintered alumina prepared according to a known process can be used as starting coarse particles of alumina in the present invention. The particle size distribution, determined according to the sedimentation method, of the pulverized product of electrofused or sintered alumina is such that the average particle size is 5 to 35 $\mu$m, preferably 10 to 25 $\mu$m, and the maximum particle size is not larger than 150 $\mu$m, preferably not larger than 74 $\mu$m. Where the average particle size of intended spherical corundum particles is smaller than 5 $\mu$m, since particles having a rounded shape can be obtained by a known process comprising adding a crystal-growing agent to aluminum hydroxide, the present invention need not be applied. If the average particle size of the starting material exceeds 35 $\mu$m or the proportion of particles having a size larger than 150 $\mu$m is increased, the effect of reducing cutting edges of the coarse particles is insufficient and good results cannot be obtained. It was found that, if an alumina hydrate, especially aluminum hydroxide or alumina gel, or finely divided alumina having a good thermal reactivity is added to electrofused alumina or sintered alumina and the mixture is heat-treated, the sphericalizing of coarse particles is effectively promoted. From the economical viewpoint, aluminum hydroxide according to the Bayer process (gibbsite crystal) is preferred, and most preferably, the average particle size is smaller than 10 $\mu$m. By observation, it was surprisingly confirmed that this sphericalizing promoter acts synergistically on coarse particles of alumina, with chemicals described hereinafter, and irregular and sharp cutting edges are selectively absorbed to sphericalize the coarse particles. As a subsidiary effect, the cohesive force of agglomerates of the heat-treated product is decreased if an alumina hydrate such as aluminum hydroxide or alumina gel is added, and as a result, disintegration into primary particles can be easily accomplished. The optimum amount added of the sphericalizing promoting agent depends on the particle size of the pulverized product of electrofused alumina or sintered alumina, but in the case of aluminum hydroxide, preferably the amount added of aluminum hydroxide is 5 to 100% by weight (calculated as alumina) based on electrofused alumina or sintered alumina. If the amount of aluminum hydroxide is smaller than 5% by weight, the cohesive force of the agglomerates becomes strong, and if the amount of aluminum hydroxide exceeds 100% by weight, excessive aluminum hydroxide is included in the form of free fine particles of alumina in the product and good results cannot be obtained.

At least one member selected from known crystal-growing agents for alumina is used as the chemical added at the heat treatment. Namely, halogen compounds, especially fluorine compounds such as $AlF_3$ , NaF, $CaF_2$ , $MgF_2$ , and $Na_3AlF_6$ , and/or boron compounds such as $B_2O_3$ , $H_3BO_3$ , and $mNa_2O \cdot nB_2O_3$ are preferred, and a mixture of a fluoride and a boron compound and a borofluoride compound is particularly preferred. The amount added of the chemical depends on the heating temperature, the residence time in the furnace, and the kind of heating furnace, but it was found that a good effect is attained if the chemical is added in an amount of 0.1 to 4.0% by weight based on the total alumina. Known means such as a single furnace, a tunnel furnace, and a rotary kiln can be used as the heating furnace. Where an alumina hydrate such as aluminum hydroxide is made present together with the chemical, the heating temperature should be higher than the temperature at which the alumina hydrate is substantially converted to $\alpha$-alumina, that is, about 1150°C, and if the alumina hydrate is not made present, the intended object of the present invention can be attained by a heating temperature higher than 1000°C. In each case, a preferred heating temperature is in the range of 1350 to 1550°C. When the heating temperature is higher than 1550°C, even if aluminum hydroxide is present, the cohesive force of the agglomerates is increased and disintegration to primary particles cannot be easily accomplished. The residence time in the heating furnace depends on the heating temperature, but in order to sphericalize the particles, a residence time of at least 30 minutes is necessary. The spherical alumina particles prepared according to the above-mentioned process take the form of secondary agglomerated particles, and therefore, disintegration is carried out in a short time by using a known pulverizing means such as a ball mill, a shaking mill or a jet mill, whereby spherical corundum particles having a desired particle size distribution can be obtained.

If electrofused alumina or sintered alumina and aluminum hydroxide having a low content of a radioactive element such as uranium or thorium are used, spherical corundum particles having a small $\alpha$-ray radiant quantity can be prepared. If spherical alumina having a small $\alpha$-ray quantity (less than 0.01 $C/cm^2 \cdot hr$) is used as a filler of a sealing resin for highly integrated IC, LSI and VLSI, a greater effect of preventing an erroneous operation (so-called soft error) by $\alpha$-rays can be attained.

The process for the preparation of the above-mentioned spherical corundum particles will now be summarized. The process comprises the steps of (1) using electrofused alumina or sintered alumina having an average particle size of 5 to 35 $\mu$m, preferably 10 to 25 $\mu$m, as the starting material, or optionally, a mixture of said alumina with fine particles of aluminum hydroxide in an amount of 5 to 100% by weight based on said alumina as the starting material, (2) adding 0.1 to 4.0% by weight of a halogen compound, especially a fluorine compound such as $CaF_2$ or $AlF_3$ , a boron compound such as $B_2O_3$ or $H_3BO_3$ , a combination of a fluorine compound and a boron compound, or a borofluoride such as $NH_4BF_4$ to the starting material, (3) calcining the mixture at a temperature of at least 1000°C, preferably 1350 to 1550°C, and (4) lightly disintegrating the calcination product to single particles of $\alpha$-alumina (corundum).

If necessary, a step (5) of removing coarse particles (having a particle size exceeding 150 $\mu$m) by sieving may be optionally set. If the product is used in the field where a high hydrothermal resistance is required, for example, as an epoxy resin sealing material, a step (6) of refining the product by pickling or washing with deionized water becomes indispensable.

The spherical corundum particles prepared according to the above-mentioned process is valuable as a starting material of a finish wrapping material or as a base material of a refractory, glass or ceramics or a composite material thereof, but these spherical corundum particles are especially valuable as a filler of a composite material for an electronic part-mounting material or electronic part-sealing material.

The spherical corundum of the present invention consists of single particles of corundum and is characteristic over spherical alumina formed by the flame-spraying method or plasma-jet method, which is a mixed crystal of $\alpha$-alumina and $\delta$-alumina and is composed of fine agglomerated particles. For this reason, the spherical corundum of the present invention is especially suitable as a filler for rubbers and plastics having a high thermal conductivity.

As the polymer in which the spherical corundum particles are to be incorporated, there can be mentioned thermoplastic engineering plastics such as polyethylene, polypropylene, nylons, polycarbonates, and polyphenylene sulfide, thermosetting plastics such as epoxy resins, unsaturated polyester resins, and phenolic resins, and elastomers such as silicone rubbers. Epoxy resins used for sealing IC's and LSI's, such as phenol-novolak resins and novolak-epoxy resins, silicone resins, and silicone rubbers for heat sinks, are preferred as the polymer. The amount filled of the spherical corundum particles varies according to the use, but when the spherical corundum particles are used as a composition with a powdery resin for a semiconductor chip-mounting material, preferably the spherical corundum particles are filled in an amount of 80 to 92% by weight. If the amount filled of the spherical corundum particles is smaller than 80% by weight, a thermal conductivity higher than $60 \times 10^{-4}$ cal/cm•sec• °C cannot be obtained, and if the amount filled of the spherical corundum particles exceeds 92% by weight, the plastic flowability of the composition becomes insufficient and molding is difficult.

In this case, the maximum particle size of the spherical corundum particles is 150 $\mu$m, and if particles having a size larger than this upper limit are incorporated, when the particles are filled in a rubber or plastic, the surface becomes rough and wear is increased, and good results cannot be obtained. There is a range of the average particle size suitable for attaining a good balance among the less abrasive property, the filling property, and the flowability. If the average particle size is smaller than 5 $\mu$m, the flowability is reduced, and if the average particle size exceeds 35 $\mu$m, the wear becomes larger than in the case of crystalline silica. It is especially preferable that the average particle size is from 10 to 25 $\mu$m.

The method for molding the highly thermally conductive rubber or plastic composition of the present invention is not particularly critical and an appropriate method is selected according to the kind of rubber or plastic. For example, known molding methods such as transfer molding, press molding, roll molding, and cast molding can be adopted.

However, when a semiconductor is sealed by transfer-molding using a compound formed by incorporating spherical alumina as described above, a resin burr is likely to adhere to a lead frame acting as a lead terminal of an IC or a transistor, and the subsequent plating step is not easily performed or an operation of removing the burr must be additionally performed. This disadvantage can be eliminated by adding finely divided alumina B to spherical corundum particles A to adjust the particle size distribution. Namely, this plastic composition comprises (1) alumina consisting of 1 to 20% by weight of finely divided alumina B having an average particle size smaller than 5 $\mu$m, the remainder of the alumina consisting of spherical corundum particles A having a maximum single particle size smaller than 150 $\mu$m, an average particle size of at least 10 $\mu$m, and a shape not including cutting edges, and (2) at least one member selected from plastics used for semiconductor-sealing materials, such as epoxy resins and silicone resins.

The finely divided alumina B is incorporated in spherical corundum particles A in this composition because, since the proportion of particles having medium and fine particles is increased, the formation of a burr by bleeding of the resin from the spherical corundum particles can be prevented. Moreover, the mixing ratio of finely divided alumina B is limited to the above-mentioned range because, if the amount of finely divided alumina B is smaller than 1% by weight, the effect of preventing the formation of a burr is insufficient, and if the amount of finely divided alumina B is larger than 20% by weight, the wear property is increased or the moldability is degraded. The particles size of spherical corundum particles A is not particularly critical. However, if particles having a maximum particle size larger than 150 $\mu$m are present, since the hardness of alumina is high, even though it has a spherical shape, the abarsive property is increased and good results cannot be obtained. The average particle size of finely divided alumina B is limited to smaller than 5 $\mu$m because the wearing property is increased in the case of alumina having an average particle size exceeding this limit.

As is apparent from the foregoing description, this resin composition having a high thermal conductivity is especially suitable for sealing semiconductors and is characterized by the alumina incorporated, and this alumina is incorporated in a main component of a semiconductor-sealing material, such as an epoxy resin represented by a cresol-novolak type epoxy resin or a phenolic resin represented by a novolak type phenolic resin, as in the conventional technique. A filler other than alumina, for example, crystalline silica, a flame retardant, a lubricant, a parting agent, a colorant, and a coupling agent can be added, so far as the intended object is attained.

According to another valuable application mode of the present invention, the spherical corundum is incorporated in a liquid rubber or plastic. In this case, a rubber or plastic composition having a low viscosity and an excellent castability and roll processability can be obtained by using a mixture comprising spherical corundum particles A of the present invention and finely divided alumina B, at a B/(A + B) ratio of from 0.10 to 0.30.

Namely, this rubber or plastic composition having a high thermal conductivity comprises (1) alumina consisting of 10 to 30% by weight of finely divided alumina having an average particle size smaller than 5 $\mu$m, the remainder of the alumina consisting of spherical corundum particles having an average particle size of at least 10 $\mu$m, and (2) at least one member selected from rubbers and plastics, wherein the amount incorporated of the alumina is at least 75% by weight based on the total composition.

The spherical corundum particles A used in this composition have an average particle size of at least 10 $\mu$m. If the average particle size is smaller than 10 $\mu$m, the viscosity-reducing effect by the combined use of spherical corundum particles A with finely divided alumina B is insufficient and good results cannot be obtained. The process for the preparation of finely divided alumina is not particularly critical, but finely divided alumina having an average particle size smaller than 5 $\mu$m is used. This is because, if finely divided alumina having a larger average particle size is used, the viscosity of the composition is increased and a satisfactory effect cannot be attained.

6

By using alumina consisting of spherical corundum particles and 10 to 30% by weight (based on the total alumina) of finely divided alumina B, even if the alumina is incorporated in an amount of at least 75% by weight (based on the total composition), preferably at least 80% by weight, in a liquid rubber or plastic, an increase of the viscosity of the resin composition, which results in a degradation of the operation adaptability, can be prevented, and a rubber or plastic composition having a desired high thermal conductivity can be obtained. If the amount of finely divided alumina B is smaller than 10% by weight based on the total alumina, when the alumina is filled at a high ratio, the effect of reducing the viscosity of the liquid resin composition is insufficient, and if the amount of finely divided alumina B exceeds 30% by weight, the abrasive property is increased or the moldability is degraded. If the amount incorporated of the alumina is smaller than 75% by weight, a desired high thermal conductivity cannot be attained.

The kind of liquid rubber or plastic is not particularly critical, but epoxy resins, unsaturated polyester resins, phenolic resins, silicone resins, and silicone rubbers are preferred. A flame retardant, a colorant, a lubricant, a precipitation-preventing agent, a defoamer, and other fillers may be optionally added to the composition, so far as the intended object of the present invention is attained.

The present invention will now be described with reference to the following examples.

Example 1

To 1000 g of commercially available pulverized sintered alumina (SRW-325F supplied by Showa Denko; average particle size = 12 $\mu$m, maximum particle size = 48 $\mu$m) were added 20 g of anhydrous aluminum fluoride of the reagent class and 20 g of boric acid of the reagent class. The mixture was charged in a heat-resistant vessel formed of an alumina ceramic and heated at 1450°C for 3 hours in a kanthal electric furnace. The hardness of agglomerates was determined with respect to the withdrawn calcination product. The calcination product was disintegrated for 30 minutes in a vibration ball mill (SM-0.6 supplied by Kawasaki Jukogyo; 100 g of the calcination product and 1000 g of HD alumina balls having a diameter of 10 mm were charged). The $Na_2O$ content of the disintegration product was determined and the particle size distribution was determined by a laser diffraction technique (Cilas), and a scanning electron microscope photograph (2500 magnifications) was taken. The results are shown in the Example 1 Column in Table 1 and Fig. 1A.

Example 2

A calcination product and a disintegration product thereof were prepared by using commercially available pulverized electrofused alumina RW-92(325F) supplied by Showa Denko; average particle size = 13 $\mu\mu' \mu\alpha\leftarrow t\mu\xi\mu \rho\alpha\ell\tau t\cong\}_\epsilon \sigma t\rightarrow_\epsilon \angle^{48}$ $\mu$m . The additives, the amounts incorporated, and the preparation method were the same as described in Example 1. The hardness of agglomerates of the calcination product, the total $Na_2O$ content of the disintegration product, the particle size distribution, and the shape of a-alumina particles were determined in the same manner as described in Example 1. The results are shown in the Example 2 Column in Table 1 and Fig. 1B.

Comparative Example 1

The same pulverized sintered alumina as used in Example 1 was heat-treated alone under the same conditions as described in Example 1, without the addition of the chemicals, and a calcination product and the disintegration product thereof were obtained. These samples were evaluated in the same manner as described in Example 1. The results are shown in the Comparative Example 1 Column in Table 1 and Fig. 2A.

Comparative Example 2

The same pulverized electrofused alumina as used in Example 2 was heat-treated alone under the same conditions as described in Example 2, without the addition of the chemicals, and the obtained calcination product and disintegration product were evaluated. The results are shown in the Comparative Example 2 Column in Table 1 and Fig. 2B.

From these results, it is seen that, in the corundum particles of the present invention (Examples 1 and 2), the average particle size was 16.0 $\mu$m and the maximum particle size was 50 $\mu$m (Table 1), and as shown in Figs. 1A and 1B, the corundum particles had a rounded spherical shape having a size of 5 to 50 $\mu$m. On the other hand, no change of the shape was caused by the heat treatment in the samples of

7

Comparative Examples 1 and 2, and it was confirmed that the particles had an irregular shape including sharp cutting edges.

Table 1

| | Example 1 | Example 2 | Comparative Example 1 | Comparative Example 2 |
|---|---|---|---|---|
| Starting Material | SRW(325F) | RW-92(325F) | SRW(325F) | RW-92(325F) |
| Crystal-Growing Agent | $AlF_3$ 2% / $H_3BO_3$ 2% | Same as in Example 1 | not added | not added |
| Heating Conditions | 1450°C x 3 hours | | | |
| Hardness of Agglomerates | Slightly hard | Slightly hard | Slightly hard | Slightly hard |
| Analysis Volumes *1   total sodium content ($Na_2O$) % | 0.01 | 0.01 | 0.15 | 0.07 |
| particle size distribution *2   +32 microns (%) | 9 | 12 | 6 | 8 |
|   -10 microns (%) | 25 | 20 | 45 | 43 |
| average particle size (microns) | 16.0 | 18.5 | 12.0 | 13.0 |
| α-alumina particles *3   Size | 5 - 50 microns | same as in Example 1 | 1 - 50 microns | same as in Comparative Example 1 |
|   Shape | spherical | spherical | irregular | irregular |

8

```
Note

*1:   analysis value obtained with respect to the

      sample disintegrated for 30 minutes by a

      vibration pot mill.

*2:   determined according to the laser diffraction

      method (Cilas)

*3:   determined by a scanning electron microscope.
```

From the results of the Examples and Comparative Examples, it is understood that the particles according to the present invention are quite different from the conventional particles having an irregular shape including sharp cutting edges, and are spherical corundum particles having a uniform shape and free of cutting edges.

Example 3

The same sintered alumina as used in Example 1 was mixed with 10% by weight (exteriorly calculated as alumina) of finely divided aluminum hydroxide having an average diameter of 1 $\mu$m, and the same chemicals as used in Example 1 were added in the same amounts as in Example 1. The mixture was calcined and disintegrated in the same manner as described in Example 1. The obtained sample was evaluated in the same manner as described in Example 1. The results are shown in the Example 3 Column in Table 2.

Example 4

The evaluation results of a sample obtained in the same manner as described in Example 3, except that the amount added of aluminum hydroxide was changed to 17% by weight, are shown in the Example 4 Column in Table 2.

Example 5

The evaluation results of a sample obtained in the same manner as described in Example 3, except that the amount added of aluminum hydroxide was changed to 30% by weight, are shown in the Example 5 Column in Table 2.

Comparative Example 3

The evaluation results of a sample obtained in the same manner as described in Example 5, except that the chemicals (anhydrous aluminum fluoride and boric acid) where not added are shown in the Comparative Example 3 Column in Table 2.

From the results of Examples 3 through 5 and Comparative Example 5, it is seen that, in the sample of Comparative Example 3 formed without the addition of chemicals, fine alumina particles formed from finely divided aluminum hydroxide were merely mixed with coarse sintered alumina particles and the shape of the latter particles was not changed, and that, in each of the samples of Examples 3 through 5 obtained by using chemicals, aluminum hydroxide was absorbed in the sintered alumina and coarse rounded spherical corundum particles were formed.

Example 6

Sintered alumina SRW 325F was continuously supplied from a tail portion of a rotary kiln having a fuel burning zone temperature adjusted to about 1350°C, and simultaneously, ammonium borofluoride at a concentration of 0.2% by weight (based on alumina) was sprayed into the fuel burning zone by using compressed air. The amount supplied of the sintered alumina was adjusted so that the residence time in a calcining zone at a temperature higher than 1000°C was about 3 hours. The calcination product withdrawn from the fuel burning zone was disintegrated for 15 minutes by a vibration ball mill, and the disintegration product was evaluated in the same manner as in Examples 1 through 5. Observation by a microscope revealed that the product consisted of coarse spherical particles having a size of about 3 to about 40 microns.

Example 7

Commercially available coarse sintered alumina of the refractory aggregate grade (SRW 48F supplied by Showa Denko) was pulverized for 1 hour by a vibration ball mill and passed through a sieve (Tyler sieve; mesh size = 104 microns). The residue on the sieve was removed. The alumina was mixed with 30% by weight of aluminum hydroxide having an average particle size of about 5 $\mu$m and with 2.0% by weight of anhydrous aluminum fluoride and 2.0% by weight of boric acid as the chemicals. The mixture was calcined and disintegrated in the same manner as described in Example 1. The evaluation results of the obtained sample are shown the Example 7 Column in Table 3.

Example 8

Commercially available electrofused alumina [RW-92(220F) supplied by Showa Denko; average particle size = 28.5 $\mu$m, maximum particle size = 196 $\mu$m] was passed through a 150-mesh sieve, and the particles which had passed through the sieve were evaluated in the same manner as described in Example 7. The evaluation results are shown in the Example 8 Column in Table 3.

For comparison, the sample formed without the addition of aluminum hydroxide was similarly tested (the results are not shown).

Where the procedures of Examples 7 and 8 were repeated without the addition of aluminum hydroxide, the particles of the calcination product were bonded to one another in the semi-fused state, and disintegration by the mill was difficult. However, where aluminum hydroxide was incorporated, the calcination product could be easily disintegrated into primary particles.

## Table 2

| | Example 3 | Example 4 | Example 5 | Comparative Example 3 |
|---|---|---|---|---|
| Starting Material | | | | |
|    SRW 325F (wt.%) | 100 | 100 | 100 | 100 |
|    aluminum hydroxide (wt.%) | 10 | 17 | 30 | 30 |
| Crystal-Growing Agents | $AlF_3$ 2% $H_3BO_3$ 2% | $AlF_3$ 2% $H_3BO_3$ 2% | $AlF_3$ 2% $H_3BO_3$ 2% | not added |
| Heating Conditions | 1450°C x 3 hours | | | |
| Hardness of Agglomerates | soft | soft | very soft | very soft |
| Analysis Volumes   total sodium content $(Na_2O)$% | 0.01 | 0.01 | 0.01 | 0.25 |
|   particle size distribution | | | | |
|     +32 microns (%) | 17 | 11 | 6 | 1 |
|     -10 microns (%) | 22 | 28 | 30 | 63 |
|   average particle size (microns) | 19.4 | 16.5 | 15.0 | 6.8 |
|   α-alumina particles | | | | |
|     Size (microns) | 5 - 50 | 4 - 50 | 3 - 50 | |
|     Shape | spherical | spherical | spherical, partially fine particles | mixture of irregular particles and fine particles |

EP 0 276 321 B1

Table 3

| | Example 7 | Example 8 |
|---|---|---|
| Starting Material | pulverized SRW 48F *1 | RW-92 (200F) |
| Aluminum Hydroxide (5 microns) | 30% | 30% |
| Crystal-Growing Agent | $AlF_3$    2% | same as in Example 7 |
| | $H_3BO_3$    2% | same as in Example 7 |
| Heating Conditions | 1450°C x 3 hours | |
| Hardness of Calcination Product | very soft | very soft |
| Analysis Values    total sodium content ($Na_2O$ wt.%) | 0.02 | 0.02 |
| particle size distribution | | |
| +32 microns (%) | 26 | 35 |
| -10 microns (%) | 12 | 15 |
| average particle size (microns) | 21.7 | 25.6 |
| α-alumina particles | | |
| size | 5 - 80 microns | 5 - 80 microns |
| shape | spherical | spherical |

Note

*1:  sample obtained by pulverization for 1 hour by vibrating ball mill and passing through 150-mesh sieve (average particle size was 11 microns).

With respect to the samples of Examples 7 and 8, the measurement of the particle size distribution and the electron microscope observation were carried out. It was confirmed that each of the products of Examples 7 and 8 consisted of spherical coarse particles of α-alumina particles having a particle size of 5 to 80 microns.

12

Example 9

Commercially available low-α-ray-radiant alumina (having an α-ray radiant quantity smaller than 0.01 $C/cm^2 \cdot hr$) was electrofused, and the obtained ingot was disintegrated, pulverized and classified under conditions such that a radioactive element was not included. The obtained electrofused alumina coarse particles having an average particle size of 20 microns and a maximum particle size of 74 microns (the α-ray radiant quantity was 0.005 $C/cm^2 \cdot hr$) were mixed with 30% by weight of aluminum hydroxide (average particle size of 5 microns) of the low α-ray-radiant type (α-ray radiant quantity was 0.005 $C/cm^2 \cdot hr$) obtained according to the known method, and 0.5% by weight of boric acid and 0.5% by weight of anhydrous aluminum fluoride were added as the chemical. The mixture was charged in a heat-resistant vessel formed of an alumina ceramic and heated at 1500°C for 3 hours in a kanthal electric furnace. The calcination product was pulverized for about 30 minutes by a vibration ball mill. The particle size distribution was determined and the size and shape of the particles were evaluated by an electron microscope. It was confirmed that the starting particles were changed to spherical coarse α-alumina particles having a particle size of 3 to 50 microns. The α-ray radiant quantity of the sample was 0.004 $C/cm^2 \cdot hr$.

Example 10

A basic recipe shown in Table 4 was set by using as the main component an epoxy resin for a sealing material for semiconductors.

Table 4

| Materials | Amounts (parts by weight) |
|---|---|
| epoxy resin *1 | 100 |
| phenolic resin *2 | 50 |
| curing promoter *3 | 1 |
| carnauba wax *4 | 3 |
| alumina | variable |

Note
*1: Sumiepoxy ESCN-220F (softening point = 77.6°C) supplied by Sumitomo Chemical K.K.
*2: Sumilite Resin PR-51688 (softening point = 98°C) supplied by Sumitomo Durez Co.
*3: Imidazole C-17Z supplied by Shikoku Kasei Kogyo K.K.
*4: supplied by Toa Chemical Industries Co., Ltd.

A composition comprising 650 parts (80.8% by weight), 850 parts (84.7% by weight) or 950 parts (86.0% by weight) of spherical corundum particles having the characteristics shown in Table 5 and prepared in Example 7 was kneaded for 3 minutes by two rolls having a surface temperature maintained at 105 to 115°C. After cooling, the product mass was disintegrated in a mortar and classified to a size smaller than 16 mesh. Tablets having a diameter of 50 mm were formed. With respect to each of the above-mentioned three compositions, the spiral flow (flow characteristic of the composition) and the thermal conductivity and thermal expansion coefficient of a test piece obtained by press molding were determined. The thermal conductivity was measured by the non-stationary hot wire method by using Shorthrerm® QTM-D II supplied by Showa Denko, the thermal expansion coefficient was expressed by the thermal expansion coefficient $\alpha_1$ at temperatures lower than the glass transition temperature, and the thermal expansion coefficient $\alpha_2$ at temperatures higher than the glass transition temperature.

The spiral flow test was carried out according to EMMI-I-66 in the following manner. Namely, a spiral cavity mold was heated at 149 ± 3°C and the sample was collected in an amount such that the cull thickness was 0.30 to 0.35 cm, and molding was carried out under a pressure of 70 ± 2 $kg/cm^2$. The distance which the sample moved along the spiral groove in the mold was measured. The result of the spiral test indicates the flowability of the sample and is important as a factor for evaluating the moldability.

In order to evaluate the abrasive property of the filler at the roll kneading step, the degree of contamination of the composition by wear of the hard chromium plating formed on the roll surface was judged with the naked eye. Namely, the degree of incorporation of a peeled piece (black) of the hard chromium plating in the composition (white) by friction between alumina and the roll surface was evaluated with the naked eye according to the following five stages: 1) no contamination, 2) faint contamination, 3) little contamination, 4) conspicuous contamination and 5) extreme contamination, and the degree of wear was determined by this contamination degree.

Note, in Table 5, the extraction impurities were measured by the pressure cooker test (160°C x 20 hours). The pH value shown was the pH value of the supernatant of a slurry containing 30% by weight of the sample. The loose bulk specific gravity was measured by allowing the sample to fall naturally in a graduated cylinder, and the heavily packed bulk specific gravity was measured by the tapping filling method. Furthermore, the average particle size was measured by the laser beam diffraction method (Cilas).

## Table 5

| Characteristics | Sample | Spherical Corundum (Example) | Coarse Alumina (Comparative Example) |
|---|---|---|---|
| moisture | (%) | 0.01 | 0.02 |
| ignition loss | (%) | 0.02 | 0.05 |
| $Fe_2O_3$ | (%) | 0.02 | 0.09 |
| $SiO_2$ | (%) | 0.13 | 0.06 |
| $Na_2O$ | (%) | 0.02 | 0.20 |
| extraction impurities | | | |
| $Na^+$ ion | (ppm) | 15.0 | 50.0 |
| $Cl^-$ ion | (ppm) | 0.4 | 2.0 |
| extracted water electric conductivity | (mS/cm) | 30 | 60 |
| pH | (30% by weight) | 5.5 | 6.0 |
| bulk density gravity | $(g/cm^3)$ | | |
| loose | | 1.70 | 1.60 |
| packed | | 2.40 | 2.20 |
| average particle size | (μm) | 21.7 | 10.0 |
| BET (specific surface area) | $(m^2/g)$ | 0.35 | 0.75 |

Comparative Example 4

A composition comprising 350 parts (70% by weight) of crystalline silica (Crystalite A-1 supplied by K.K. Tatsumori) having an average particle size of 9.7 μm and a maximum particle size of 48 μm or fused silica (FuseLex E-1 supplied by K.K. Tatsumori) having an average particle size of 12.1 μm and a maximum particle size of 48 μm instead of spherical corundum was prepared in the same manner as described in Example 10, and the composition was evaluated in the same manner as described in Example 10.

Comparative Example 5

A composition comprising 650 parts of a sample formed by refining pulverized low-sodium alumina of the Bayer process (plate-like particles having an average size of 5 $\mu$m) by washing with pure water or a sample ("Coarse Alumina" in Table 5) obtained by purifying commercially available sintered alumina (SRW 325F supplied by Showa Denko) having an average particle size of 10.0 $\mu$m by washing with pure water, instead of the spherical corundum, was prepared in the same manner as in Example 10, and the characteristics were evaluated as in Example 10.

The results obtained in Example 10 and Comparative Examples 4 and 5 are shown in Table 6.

Table 6

| | | Example 10 | | | Comparative Example 4 | | Comparative Example 5 | |
|---|---|---|---|---|---|---|---|---|
| Kind of Filler — Alumina | spherical corundum | 650 | 850 | 950 | | | | |
| | alumina by Bayer process | | | | | | 650 | |
| | sintered alumina | | | | | | | 650 |
| Silica | fused silica | | | | 350 | | | |
| | crystalline silica | | | | | 350 | | |
| Characteristics of Composition | wearing index | 2 | 3 | 3 | 1 | 3 | 4 | 5 |
| | spiral flow length (cm) | 65 | 45 | 37 | 47 | 95 | 20 | 39 |
| | thermal conductivity ($\times 10^{-4}$ cal/cm·sec·°C) | 62 | 75 | 84 | 16 | 34 | 55 | 53 |
| | thermal expansion coefficient $\alpha_1$ ($\times 10^{-5}$/°C) | 2.2 | 1.9 | 1.8 | 1.9 | 3.4 | 1.9 | 2.2 |
| | thermal expansion coefficient $\alpha_2$ ($\times 10^{-5}$/°C) | 6.6 | 6.0 | 5.8 | 5.6 | 8.1 | 5.8 | 7.0 |
| | glass transition temperature (°C) | 179 | 175 | 173 | 178 | 173 | 172 | 173 |

As is apparent from the foregoing results, the spherical corundum of the present invention can be easily filled in a resin even at a weight ratio higher than 80% by weight, the wear by the spherical corundum of the present invention is much lower than that of crystalline silica, alumina by the Bayer process and

16

sintered alumina, and the flowability represented by the spiral flow length is greatly improved. Accordingly, a thermal conductivity higher than $60 \times 10^{-4}$ cal/cm•sec• °C can be easily obtained, and by increasing the amount incorporated of the spherical corundum, a low thermal expansion coefficient comparable to that of the fused silica-containing composition can be obtained.

Example 11

A composition was prepared by using an epoxy resin having a softening point of 68.6°C (Smiepoxy ESCN-220-3 supplied by Sumitomo Chemical K.K.) instead of the epoxy resin used in Example 10, changing the phenolic resin used as the curing agent in Example 10 to a phenolic resin having a softening point of 79°C (Shonol BRG-556 supplied by Showa Highpolymer Co., Ltd.) and incorporating 1050 parts (87.5% by weight) of spherical corundum shown in Table 5 without changing the amounts of other additives used in Example 10, and the characteristics of the composition were evaluated in the same manner as described in Example 10.

It was found that the wear index of the composition was 3, the spiral flow length was 40 cm, the thermal conductivity was $93 \times 10^{-4}$ cal/cm•sec• °C, and the thermal expansion coefficient $\alpha_1$ was $1.7 \times 10^{-5}$/°C.

Comparative Example 6

Spherical corundum purified products having average particle sizes of about 4 $\mu$m and about 40 $\mu$m, respectively, were prepared from sintered alumina finely divided into an average particle size of 3 $\mu$m and sintered alumina having an average particle size of 37 $\mu$m, respectively. It was intended to prepare compositions by using these spherical corundum purified products in the same manner as described in Example 11. In the case of alumina having an average particle size of 4 $\mu$m, the composition became hard and roll kneading was impossible. In the case of alumina having an average particle size of 40 $\mu$m, kneading was relatively easy but the wear index was increased because the particle size was too large.

Examples 12 through 14 and Comparative Examples 7 through 11

Three kinds of alumina particles having characteristics shown in Table 7, that is, spherical alumina A, fine alumina B and medium alumina C, were mixed at a ratio shown in Table 8 to form a mixed filler. The filler was incorporated in an amount shown in Table 9 into a resin to form a semiconductor-sealing resin composition.

With respect to the obtained material, the spiral flow length was measured according to the EMMI method, and the length of the resin burr was measured. Moreover, in order to evaluate the wear property of the compound, the contamination of the compound with the hard chromium plating formed on the roll surface at the roll kneading step was judged with the naked eye and expressed by the index.

## Table 7

| | Spherical Alumina A[1] | Fine Alumina B[2] | Medium Alumina C[3] |
|---|---|---|---|
| Average Particle Size | 20 | 1.5 | 10 |
| Maximum Particle Size | 64 | 6 | 32 |
| Shape | spherical | irregular | irregular |

Note

1) spherical alumina

2) AL-45-1 supplied by Showa Denko K.K.

3) SRW 325F supplied by Showa Denko K.K.

Table 8

|  |  | Example No. | | | Comparative Example No. | | | | |
|---|---|---|---|---|---|---|---|---|---|
|  |  | 12 | 13 | 14 | 7 | 8 | 9 | 10 | 11 |
| Mixing Ratio (%) | spherical alumina A[1] | 99 | 90 | 80 | 100 | 70 | 50 |  | 80 |
|  | fine alumina B[2] | 1 | 10 | 20 |  | 30 | 50 | 100 |  |
|  | medium alumina C[3] |  |  |  |  |  |  |  | 20 |

Note
1) ESCN-220-3 supplied by Sumitomo Chemical K.K.
2) BRG-556 supplied by Showa Highpolymer Co., Ltd.
3) C-17Z supplied by Shikoku Chemical K.K.

Table 9

| Materials | Amounts (g) |
|---|---|
| Epoxy Resin 1) | 100 |
| Phenolic Resin 2) | 50 |
| Curing Promoter 3) | 1 |
| Mold Release 4) | 3 |
| Alumina | 850 |

Note
1) ESCN-220-3 supplied by Sumitomo Chemical K.K.
2) BRG-556 supplied by Showa Highpolymer Co., Ltd.
3) C-17Z supplied by Shikoku Chemical K.K.
4) carnauba wax supplied by Hoechst

The length of the resin burr referred to herein means the length of a burr formed when the molding material was transfer-molded at a width of 10 mm and a slit thickness of 10, 30, 75 or 98 $\mu$m. If the burr length is smaller than 10 mm at each slit thickness, no problem arises.

Table 10

| | | Example No. | | | Comparative Example No. | | | | |
|---|---|---|---|---|---|---|---|---|---|
| | | 12 | 13 | 14 | 7 | 8 | 9 | 10 | 11 |
| Ratio | B/A + B | 0.01 | 0.10 | 0.20 | 0 | 0.30 | 0.50 | 1.00 | - |
| Characteristics | spiral flow length (cm)[1] | 55 | 60 | 62 | 52 | 55 | 35 | 29 | 38 |
| | Wear index[2] | 2 | 2 | 2 | 2 | 3 | 4 | 5 | 5 |
| burr strength (mm) | 10 $\mu$m | 4 | 2 | 2 | 11 | 2 | 7 | 30 | 20 |
| | 30 $\mu$m | 6 | 3 | 3 | 25 | 8 | 10 | 45 | 26 |
| | 76 $\mu$m | 8 | 4 | 4 | 38 | 10 | 15 | 50 | 41 |
| | 98 $\mu$m | 10 | 5 | 5 | 45 | 15 | 20 | 50 | 50 |

Note
1) 149 ± 3°C, 70 ± 2 kg/cm$^2$
2) 1: no contamination
2: faint contamination
3: little contamination
4: conspicious contamination
5: extreme contamination

As is apparent from the test results shown in Table 10, only in Examples 12 through 14 where the added alumina was fine alumina B and the mixing ratio was 0.01 to 0.20, was the wear property low, the formation of a resin burr controlled, and the flowability represented by the spiral flow length large.

In Comparative Examples 8 and 9, where even if the added alumina was alumina B, the ratio of the alumina B was outside the range specified in the present invention, the wear index was increased although formation of a burr was controlled to a certain extent. In Comparative Example 10, where all of the filled alumina was the fine alumina, wear was extreme, the flowability was reduced, the burr length was large, and a satisfactory material could not be obtained. In Comparative Example 11, where the added alumina was medium alumina having an average particle size exceeding 5 microns, the spiral flow length was short, wear was extreme, and the formation of burrs was not controlled.

Note, the thermal conductivities obtained in these examples were 74 to 75 x 10$^{-4}$ cal/cm•sec• °C.

Examples 15 through 18 and Comparative Examples 12 through 17

The alumina shown in Table 11 was incorporated at a ratio shown in Table 12 into an epoxy resin to obtain a resin composition having a high thermal conductivity. The mixing ratio of the alumina particles in the added alumina was as shown in Table 13. Note, alumina B, alumina C, and alumina D were according to the Bayer process.

Table 11

| Characteristics of Alumina | | | | | | |
|---|---|---|---|---|---|---|
| Items | Spherical Corundum A | Fine Alumina B | Medium Alumina C | Medium Alumina D | Sintered Alumina E | Spherical Corundum F |
| Average Particle Size ($\mu$m) | 20 | 1 | 6 | 8 | 12 | 9 |
| Maximum particle Size ($\mu$m) | 64 | 12 | 16 | 24 | 32 | 48 |

19

Table 12

| Mixing Ratio | |
|---|---|
| Material | Amount Incorporated |
| Epoxy Resin[1] Curing Agent[2] Alumina | 50 g 40 g 200 - 400 g |

Note
1) Epikote 815 supplied by Shell Chemical
2) NH-2200 supplied by Hitachi Chemical Co., Ltd.

Table 13

| Composition (%) of Added Alumina | | | | | | | | | |
|---|---|---|---|---|---|---|---|---|---|
| | Example No. | | | Comparative Example No. | | | | | |
| | 15 | 16 | 17 | 12 | 13 | 14 | 15 | 16 | 17 |
| Spherical Corundum A | 90 | 80 | 70 | 100 | 60 | 80 | | | |
| Fine Alumina B | 10 | 20 | 30 | | 40 | | | | 20 |
| Medium Alumina C | | | | | | 20 | | | |
| Medium Alumina D | | | | | | | 100 | | |
| Sintered Alumina E | | | | | | | | 100 | |
| Spherical Corundum F | | | | | | | | | 80 |

The viscosity of each of the so-obtained compounds was measured, and the results are shown in Table 14.

Table 14

| Viscosity (poise) of Compound | | | | | | | | | |
|---|---|---|---|---|---|---|---|---|---|
| Amount (g) of Added Alumina | Example No. | | | Comparative Example No. | | | | | |
| | 15 | 16 | 17 | 12 | 13 | 14 | 15 | 16 | 17 |
| 200 | 69 | 65 | 68 | 70 | 85 | 70 | 232 | 172 | 125 |
| 250 | 130 | 105 | 135 | 153 | 192 | 148 | 785 | 671 | 391 |
| 300 | 226 | 173 | 229 | 371 | 503 | 335 | 1920 | 2390 | 980 |
| 350 | 478 | 358 | 500 | 750 | 1020 | 721 | above 3000 | above 3000 | 1970 |
| 400 | 724 | 550 | 770 | 1300 | 1630 | 1250 | above 3000 | above 3000 | above 3000 |

From the experimental results shown in Table 14, it is seen that, only when the fine alumina having an average particle size smaller than 5 $\mu$m was incorporated in an amount of 10 to 30% by weight in spherical corundum, was the viscosity of the resulting compound low and the compound had a good operation adaptability even if the alumina was added in a large amount. In Comparative Example 12, where spherical corundum alone was incorporated, or in Comparative Example 13, where the ratio of fine alumina to spherical corundum was outside the range specified in the present invention, the viscosity was increased. In Comparative Example 14 where the average particle size of added fine alumina was larger than 5 $\mu$m, even if the mixing ratio of the fine alumina was 10 to 30% by weight, when the alumina filler was incorporated in a large amount, the viscosity was high and a compound having a good operation adaptability could not be obtained. Similarly, in Comparative Example 15, where the particle size of the added alumina was relatively large, in Comparative Example 16, where the pulverized sintered alumina was incorporated, or in Comparative Example 17, where the average particle size of spherical corundum particles was smaller than 10 $\mu$m, a satisfactory compound was not obtained.

The alumina filler was gradually added to the resin, and when the viscosity of the compound reached 500 poise, the ratio of the alumina in the compound was determined. The compound at this time was cured and the thermal conductivity was measured. The results are shown in Table 15.

Table 15

|  | Example No. | | | Comparative Example No. | | | | | |
|---|---|---|---|---|---|---|---|---|---|
|  | 15 | 16 | 17 | 12 | 13 | 14 | 15 | 16 | 17 |
| Ratio (% by weight) of Alumina at which Viscosity Reached | 80 | 81 | 80 | 78 | 77 | 79 | 72 | 73 | 74 |
| 500 poise Thermal Conductivity $10^{-4}$ cal/cm•sec• °C | 53 | 56 | 53 | 45 | 42 | 49 | 31 | 33 | 35 |

It is considered that the operation adaptability of a liquid compound is drastically degraded if the viscosity of the compound exceeds 500 poise. As is seen from Table 15, only in Examples 15 through 17 where spherical corundum particles containing 10 to 30% by weight of fine alumina having an average particle size smaller than 5 $\mu$m were incorporated, was the viscosity of the compound lower than 500 poise even if the alumina was incorporated in an amount of 80% or more, and a thermal conductivity higher than 50 x $10^{-4}$ cal/cm•sec• °C obtained. On the other hand, where spherical corundum particles were used, the average particle size of the added alumina was larger than 5 $\mu$m or the average particle size of the added alumina was smaller than 5 $\mu$m, the mixing ratio of the added alumina was outside the range of 10 to 30% by weight, as in Comparative Examples 12 through 14, or in where pulverized sintered alumina having a relatively large particle size or spherical corundum having an average particle size smaller than 10 $\mu$m was used, as in Comparative Examples 12 and 15 through 17, the viscosity reached 500 poise when the amount added of the alumina was still small, and therefore, a compound providing a high thermal conductivity could not be obtained.

INDUSTRIAL APPLICABILITY

The spherical corundum of the present invention has a low abrasive property and excellent flow characteristics and is valuable as a filler for a sealing material for electronic parts, a starting material of a finish wrapping material, a base material of a refractory, glass or ceramic. Moreover, a rubber or plastic composition comprising a high concentration of this spherical corundum has a high thermal conductivity and a low thermal expansion coefficient, and therefore, this composition is especially valuable as an insulating sealing material for a semiconductor device.

**Claims**

1. A process for the preparation of spherical corundum particles, characterized by adding one or more members selected from the group consisting of halogen compounds, boron compounds and alumina hydrates to a pulverized product of at least one member of electrofused alumina and sintered alumina, which has a maximum particle size smaller than 150 $\mu$m and an average particle size of 5 to 35 $\mu$m, heat-treating the mixture at a temperature of at least 1000°C, and disintegrating the heat-treated product.

2. A process for the preparation of spherical corundum particles according to claim 1, wherein the heat treatment is carried out at 1000 to 1550°C.

3. A process for the preparation of spherical corundum particles according to either claim 1 or claim 2, wherein the halogen compound is one or more members selected from the group consisting of $AlF_3$, NaF, $CaF_2$, $MgF_2$ and $Na_3AlF_6$.

4. A process for the preparation of spherical corundum particles according to any one of claims 1 to 3, wherein the boron compound is one or more members selected from the group consisting of $B_2O_3$, $H_3BO_3$, $mNa_2O.nB_2O_3$ and borofluorides.

5. A process for the preparation of spherical corundum particles according to any one of claims 1 to 4, wherein the alumina hydrate is at least an aluminum hydroxide produced by the Bayer process and alumina gel.

6. A process for the preparation of spherical corundum particles according to any one of claims 1 to 5, wherein each of electrofused alumina, sintered alumina and alumina hydrate has an $\alpha$-ray radiant quantity smaller than 0.01 C/cm$^2$.hr.

7. A composition comprising spherical corundum particles having an average particle size of 5 to 35 $\mu$m and a shape not including sharp edges thereby having a reduced abrasive and wearing property, and at least one member selected from rubbers and plastics material.

8. A composition according to claim 7, wherein the spherical corundum particles have a maximum particle size smaller than 150 $\mu$m.

9. A composition comprising spherical corundum particles and at least one member selected from rubbers and plastics material wherein the spherical corundum particles have a maximum particle size smaller than 150 $\mu$m and an average particle size of 5 to 35 $\mu$m and are formed by adding at least one of the members of halogen compounds, boron compounds and alumina hydrates to a pulverized product of at least one of electrofused alumina and sintered alumina, which has a maximum single particle size smaller than 150 $\mu$m and an average particle size of 5 to 35 $\mu$m, heat-treating the mixture at a temperature of at least 1000°C, and disintegrating the heat-treated product.

10. A composition according to any one of claims 7 to 9, wherein the spherical corundum particles have an $\alpha$-ray radiant quantity smaller than 0.01 C/cm$^2$.hr.

11. A composition according to any one of claims 7 to 10, wherein the spherical corundum particles are contained at a weight ratio of 80 to 92%.

12. A composition according to any one of claims 7 to 11, wherein the spherical corundum particles have an average particle size of 10 to 25 $\mu$m.

13. A composition according to any one of claims 7 to 12, wherein the at least one plastics material is selected from thermoplastic engineering plastics such as polypropylene, polyethylene, nylons, polycarbonates and polyphenylene sulfide, and thermosetting plastics such as epoxy resins, unsaturated polyester resins and phenolic resins.

14. A composition according to any one of claims 7 to 13, wherein the rubber is a silicone rubber.

15. A composition according to any one of claims 7 to 14, for sealing a semiconductor, which includes 1 to 20% by weight of finely divided alumina having an average particle size smaller than 5 $\mu$m, the remainder of the alumina consisting of the said spherical corundum particles.

16. A composition according to any one of claims 7 to 14, which includes 10 to 30% by weight of finely divided alumina having an average particle size smaller than 5 $\mu$m, the remainder of the alumina consisting of the said spherical corundum particles, wherein the amount of the alumina incorporated is at least 75% by weight of the total composition.

17. An electronic part comprising (1) a semiconductor chip for a power module, and (2) a mounting member for mounting thereby the semiconductor chip while having contact therewith, said mounting member being composed of a composition according to claims 7 to 15.

18. An electronic part according to claim 17, wherein the mounting member is an insulating sealing member for the semiconductor chip.

19. An electronic part according to either claim 17 or claim 18, wherein the mounting member is a circuit substrate on which the semiconductor chip is mounted.

20. Corundum powder comprising a plurality of individual particles characterized by consisting substantially of spherical particles, having an average particle size of 5 to 35 $\mu$m and a shape not including sharp edges thereby having a reduced abrasive and wearing property.

21. Corundum powder according to claim 20, wherein the spherical particles have a maximum particle size smaller than 150 $\mu$m and an $\alpha$-ray radiant quantity smaller than 0.01 C/cm$^2$.hr.

22. Corundum powder according to either claim 20 or claim 21, wherein the spherical particles have an average particle size of 10 to 25 $\mu$m.

**Patentansprüche**

1. Verfahren zur Herstellung von kugelförmigen Korundkörpern, **dadurch gekennzeichnet, daß** ein oder mehrere Elemente, die aus der Gruppe ausgewählt sind, die aus Halogenverbindungen, Borverbindungen und Aluminiumoxidhydraten besteht, einem pulverisierten Produkt aus mindestens einem Element aus Elektrokorund und gesintertem Aluminiumoxid, das eine maximale Partikelgröße von kleiner als 150 $\mu$m und eine durchschnittliche Partikelgröße von 5 bis 35 $\mu$m besitzt, zugesetzt werden, das Gemisch bei einer Temperatur von mindestens 1000 °C wärmebehandelt wird und das wärmebehandelte Produkt zerkleinert wird.

2. Verfahren zur Herstellung von kugelförmigen Korundkörpern nach Anspruch 1, bei dem die Wärmebehandlung bei 1000 bis 1550 °C durchgeführt wird.

3. Verfahren zur Herstellung von kugelförmigen Korundkörpern nach Anspruch 1 oder 2, bei dem die Halogenverbindung durch eine oder mehrere Elemente gebildet ist, die aus der Gruppe ausgewählt sind, welche aus AlF$_3$, NaF, CaF$_2$, MgF$_2$ und Na$_3$AlF$_6$ besteht.

4. Verfahren zur Herstellung von kugelförmigen Korundkörpern nach einem der Ansprüche 1 bis 3, bei dem die Borverbindung durch ein oder mehrere Elemente gebildet ist, die aus der Gruppe ausgewählt sind, die aus B$_2$O$_3$, H$_3$BO$_3$, mNa$_2$O.nB$_2$O$_3$ und Borfluoriden besteht.

5. Verfahren zur Herstellung von kugelförmigen Korundkörpern nach einem der Ansprüche 1 bis 4, bei dem das Aluminiumoxidhydrat mindestens ein durch den Bayer-Prozeß hergestelltes Aluminiumhydroxid und Aluminiumoxidgel ist.

6. Verfahren zur Herstellung von kugelförmigen Korundkörpern nach einem der Ansprüche 1 bis 5, bei dem der Elektrokorund, das gesinterte Aluminiumoxid und das Aluminiumoxidhydrat jeweils eine $\alpha$-Strahlen-Abgabe besitzen, die geringer ist als 0,01 C/cm$^2$ h.

7. Zusammensetzung mit kugelförmigen Korundkörpern mit einer durchschnittlichen Partikelgröße von 5 bis 35 $\mu$m und einer Form, die keine scharfen Ecken besitzt, so daß verbesserte Verschleißeigenschaften erzielt werden, und mit mindestens einem aus Gummi und Kunststoff ausgewähltem Element.

8. Zusammensetzung nach Anspruch 7, bei der die kugelförmigen Korundkörper eine maximale Partikelgröße besitzen, die geringer ist als 150 $\mu$m.

9. Zusammensetzung mit kugelförmigen Korundpartikeln und mindestens einem Element, das aus Gummi und Kunststoff ausgewählt ist, wobei die kugelförmigen Korundpartikel eine maximale Partikelgröße besitzen, die geringer ist als 150 $\mu$m, und eine durchschnittliche Partikelgröße von 5 bis 35 $\mu$m aufweisen sowie durch Zugabe von mindestens einem der Elemente aus Halogenverbindungen, Borverbindungen und Aluminiumoxidhydraten zu einem pulverisierten Produkt von mindestens einem der Elemente Elektrokorund und gesintertem Aluminiumoxid, das eine maximale Einzelpartikelgröße, die kleiner ist als 150 $\mu$m, und eine durchschnittliche Partikelgröße von 5 bis 35 $\mu$m aufweist, Wärmebehandlung des Gemisches bei einer Temperatur von mindestens 1000 °C und Zerkleinern des wärmebehandelten Produktes hergestellt worden sind.

10. Zusammensetzung nach einem der Ansprüche 7 bis 9, bei der die kugelförmigen Korundpartikel eine $\alpha$-Strahlen-Abgabe aufweisen, die geringer ist als 0,01 C/cm$^2$ h.

**11.** Zusammensetzung nach einem der Ansprüche 7 bis 10, bei der die kugelförmigen Korundkörper in einem Gewichtsverhältnis von 80 bis 92 % enthalten sind.

**12.** Zusammensetzung nach einem der Ansprüche 7 bis 11, bei der die kugelförmigen Korundkörper eine durchschnittliche Partikelgröße von 10 bis 25 $\mu$m aufweisen.

**13.** Zusammensetzung nach einem der Ansprüche 7 bis 12, bei der das mindestens eine Kunststoffmaterial aus den thermoplastischen technischen Kunststoffen ausgewählt ist, wie beispielsweise Polypropylen, Polyäthylen, Nylon, Polykarbonaten und Polyphenylensulphid, und aus den duroplastischen Kunststoffen, wie beispielsweise Epoxydharzen, ungesättigten Polyesterharzen und Phenolharzen.

**14.** Zusammensetzung nach einem der Ansprüche 7 bis 13, bei der der Gummi ein Silikongummi ist.

**15.** Zusammensetzung nach einem der Ansprüche 7 bis 14 zum Abdichten eines Halbleiters, die 1 bis 20 Gew.% von fein verteiltem Aluminiumoxid mit einer durchschnittlichen Partikelgröße, die geringer ist als 5 $\mu$m, enthält, wobei der restliche Teil des Aluminiumoxides aus den kugelförmigen Korundkörpern besteht.

**16.** Zusammensetzung nach einem der Ansprüche 7 bis 14, die 10 bis 30 Gew.% von fein verteiltem Aluminiumoxid mit einer durchschnittlichen Partikelgröße, die geringer ist als 5 $\mu$m, enthält, wobei der Rest des Aluminiumoxides aus den kugelförmigen Korundkörpern besteht und die Menge des eingearbeiteten Aluminiumoxides mindestens 75 % der Gesamtzusammensetzung beträgt.

**17.** Elektronisches Teil aus (1) einem Halbleiterchip für einen Leistungsmodul und (2) einem Montageelement zur Montage des Halbleiterchips in Kontakt damit, wobei das Montageelement aus einer Zusammensetzung der Ansprüche 7 bis 15 besteht.

**18.** Elektronisches Teil nach Anspruch 17, bei dem das Montageelement ein isolierendes Dichtungselement für den Halbleiterchip ist.

**19.** Elektronisches Teil nach Anspruch 17 oder 18, bei dem das Montageelement ein Schaltungssubstrat ist, auf dem der Halbleiterchip montiert ist.

**20.** Korundpulver mit einer Vielzahl von Einzelkörpern, **dadurch gekennzeichnet, daß** es im wesentlichen aus kugelförmigen Körpern besteht, die eine durchschnittliche Partikelgröße von 5 bis 35 $\mu$m und eine Form besitzen, die keine scharfen Kanten aufweist, um auf diese Weise eine bessere Verschleißfestigkeit sicherzustellen.

**21.** Korundpulver nach Anspruch 20, bei dem die kugelförmigen Körper eine maximale Partikelgröße besitzen, die geringer ist als 150 $\mu$m, und eine $\alpha$-Strahlen-Abgabe aufweisen, die geringer ist als 0,01 C/cm² h.

**22.** Korundpulver nach Anspruch 20 oder 21, bei dem die kugelförmigen Körper eine durchschnittliche Partikelgröße von 10 bis 25 $\mu$m aufweisen.

**Revendications**

**1.** Procédé de préparation de particules sphériques de corindon, caractérisé en ce qu'on ajoute un ou plusieurs éléments choisis dans le groupe constitué par des composés d'halogène, des composés de bore et des alumines hydratées à un produit pulvérisé d'au moins un élément du groupe constitué par l'alumine électrofondue et l'alumine frittée, qui a une taille particulaire maximale inférieure à 150 $\mu$m et une taille particulaire moyenne de 5 à 35 $\mu$m, en ce qu'on traite à la chaleur le mélange à une température d'au moins 1 000 °C, et en ce qu'on désintègre le produit traité à la chaleur.

**2.** Procédé de préparation de particules sphériques de corindon selon la revendication 1, dans lequel on effectue le traitement à la chaleur entre 1 000 et 1 550 °C.

3. Procédé de préparation de particules sphériques de corindon selon la revendication 1 ou 2, dans lequel le composé d'halogène est un ou plusieurs éléments choisis dans le groupe constitué par $AlF_3$, $NaF$, $CaF_2$, $MgF_2$ et $Na_3AlF_6$.

4. Procédé de préparation de particules sphériques de corindon selon l'une quelconque des revendications 1 à 3, dans lequel le composé de bore est un ou plusieurs éléments choisis dans le groupe constitué par $B_2O_3$, $H_3BO_3$, $mNa_2O.nB_2O_3$ et les borofluorures.

5. Procédé de préparation de particules sphériques de corindon selon l'une quelconque des revendications 1 à 4, dans lequel l'alumine hydratée est au moins un hydroxyde d'aluminium produit par le procédé BAYER et un gel d'alumine.

6. Procédé de préparation de particules sphériques de corindon selon l'une quelconque des revendications 1 à 5, dans lequel chacune des alumine électrofondue, alumine frittée et alumine hydratée possède une quantité d'irradiation de rayons alpha inférieure à 0,01 $C/cm^2.h$.

7. Composition comprenant des particules sphériques de corindon ayant une taille particulaire moyenne de 5 à 35 $\mu$m et une forme n'incluant pas d'arêtes vives, ayant ainsi des propriétés d'abrasion et d'usure réduites, et au moins un élément choisi parmi les caoutchoucs et les matières plastiques.

8. Composition selon la revendication 7, dans laquelle les particules sphériques de corindon ont une taille particulaire maximum inférieure à 150 $\mu$m.

9. Composition comprenant des particules sphériques de corindon et au moins un élément choisi parmi les caoutchoucs et les matières plastiques où les particules sphériques de corindon ont une taille particulaire maximum inférieure à 150 $\mu$m une taille particulaire moyenne de 5 à 35 $\mu$m et sont formées en ajoutant au moins un élément choisi dans le groupe constitué par des composés d'halogène, des composés de bore et des alumines hydratées à un produit pulvérisé d'au moins un élément choisi dans le groupe de l'alumine électrofondue et l'alumine frittée, qui a une taille particulaire maximum inférieure à 150 $\mu$m et une taille particulaire moyenne de 5 à 35 $\mu$m, en traitant à la chaleur le mélange à une température d'au moins 1 000°C, et en désintégrant le produit traité à la chaleur.

10. Composition selon l'une quelconque des revendications 7 à 9, dans laquelle des particules sphériques de corindon possèdent une quantité d'irradiation de rayons alpha inférieure à 0,01 $C/cm^2.h$.

11. Composition selon l'une quelconque des revendications 7 à 10, qui contient les particules sphériques de corindon dans un rapport pondéral de 80 à 92 %.

12. Composition selon l'une quelconque des revendications 7 à 11, dans laquelle les particules sphériques de corindon ont une taille particulaire moyenne de 10 à 25 $\mu$m.

13. Composition selon l'une quelconque des revendications 7 à 12, dans laquelle la matière plastique au moins présente est choisie parmi les matières thermoplastiques industrielles comme le polypropylène, le polyéthylène, les nylons, les polycarbonates et le sulfure de polyphénylène, et les matières plastiques thermodurcissables comme les résines epoxyde, les résines de polyester insaturées et les résines phénoliques.

14. Composition selon l'une quelconque des revendications 7 à 13, dans laquelle le caoutchouc est un caoutchouc de silicone.

15. Composition selon l'une quelconque des revendications 7 à 14, pour souder un semi-conducteur, qui comprend de 1 à 20 % en poids d'alumine finement divisée ayant une taille particulaire moyenne inférieure à 5 $\mu$m, le reste de l'alumine étant constitué desdites particules sphériques de corindon.

16. Composition selon l'une quelconque des revendications 7 à 14, qui comprend de 10 à 30 % en poids d'alumine finement divisée ayant une taille particulaire moyenne inférieure à 5 $\mu$m, le reste de l'alumine étant constitué desdites particules sphériques de corindon, où la quantité d'alumine incorporée est d'au moins 75 % en poids de la composition totale.

**17.** Pièce électronique comprenant (1) une pastille de semi-conducteur pour module générateur, et (2) un élément de montage pour monter la pastille de semiconducteur tout en étant en contact avec elle, ledit élément de montage étant constitué d'une composition selon les revendications 7 à 15.

**18.** Pièce électronique selon la revendication 17, dans laquelle l'élément de montage est un élément de soudure isolant pour la pastille de semi-conducteur.

**19.** Pièce électronique selon la revendication 17 ou la revendication 18, dans laquelle l'élément de montage est un substrat de circuit sur lequel est montée la pastille de semi-conducteur.

**20.** Poudre de corindon comprenant plusieurs particules individuelles caractérisées en ce qu'elles se composent pour l'essentiel de particules sphériques ayant une taille particulaire moyenne de 5 à 35 $\mu$m et une forme ne comportant pas d'arêtes vives, ayant ainsi des propriétés d'abrasion et d'usure réduites.

**21.** Poudre de corindon selon la revendication 20, dans laquelle les particules sphériques ont une taille particulaire maximum inférieure à 150 $\mu$m et une quantité d'irradiation de rayons alpha inférieure à 0,01 C/cm$^2$.h.

**22.** Poudre de corindon selon la revendication 20 ou la revendication 21, dans laquelle les particules sphériques ont une taille particulaire moyenne de 10 à 25 $\mu$m.

## *Fig. IA*

## *Fig. IB*

## *Fig. 2A*

## *Fig. 2B*